# EUROPÄISCHE PATENTANMELDUNG

(11) **EP 2 080 587 A1**
(43) Veröffentlichungstag der Anmeldung: **22.07.2009**
(21) Anmeldenummer: 08020967.9
(22) Anmeldetag: 03.12.2008
(51) Int. Cl.: B24B 19/00, B23F 1/02

(54) **Verfahren und Vorrichtung zum Zahnradschleifen**

(30) Priorität: 16.01.2008 DE 202008000645 U; 15.04.2008 DE 102008019074
(71) Anmelder: Höfler Maschinenbau GmbH, 76275 Ettlingen (DE)
(72) Erfinder: Geiser, Hansjörg, Dr.-Ing., 76571 Gaggenau-Ottenau (DE)
(74) Vertreter: Mischung, Ralf

(57) **Zusammenfassung**

Die Erfindung betrifft ein Verfahren zum Schleifen von außen- und/oder innenverzahnten Zahnrädern, wobei mittels eines Schleifwerkzeugs 1 Zahnlücken 2 in ein im Wesentlichen scheiben- oder zylinderförmiges Werkstück 3 eingebracht werden, wobei das rotierende Werkzeug 1 von einer Eintrittsstirnseite 4 des Werkstückes 3 in Richtung zur einer der Eintrittsseite 4 gegenüberliegenden Austrittsstirnseite 5 oder in umgekehrter Richtung von der Austrittsstirnseite 5 in Richtung der Eintrittsstirnseite 4 bewegt wird, um dabei eine Zahnlücke zu schleifen, und wobei ein Kontaktbereich zwischen Werkzeug 1 und Werkstück 3 mit einem Betriebsmittel benetzt wird, welches über eine vorzugsweise mit dem Werkzeug 1 bewegte Zuführeinrichtung zugeführt wird, so dass das Betriebsmittel mittels eines auf oder an der Eintrittsstirnseite 4 und/oder auf oder an der Austrittsstirnseite 5 angeordneten Führungsmittels 6 zwangsgeführt wird, um ein Abströmen des Schmiermittels vom Werkstück 3 zu erschweren.

## Beschreibung

Die vorliegende Erfindung betrifft ein Verfahren und eine Vorrichtung zum Schleifen oder Fräsen von außen- und/oder innen verzahnten Zahnrädern, nach dem Oberbegriff des Anspruchs 1 bzw. 7.

Aus dem Stand der Technik ist bekannt, Zahnräder mittels scheiben- oder schneckenförmigen Werkzeug herzustellen: Dies kann im diskontinuierlichen Profilverfahren oder im kontinuierlichen Wälzverfahren erfolgen.

Eine einfache Ausführungsform des Schleifverfahrens sieht dabei in an sich bekannter Weise vor, dass mittels einer Schleifscheibe oder Schleifschnecke Zahnlücken in einem im wesentlichen scheiben- oder zylinderförmigen Körper eingebracht bzw. bearbeitet werden. Dabei wird die rotierende Schleifscheibe oder Schleifschnecke von der Eintrittsstirnseite des Werkstückes in Richtung der Austrittsstirnseite - vorzugsweise weitgehend achsparallel zur Werkstückachse - bewegt. Dabei wird eine Zahnlücke geschliffen.

Typischerweise wird der Arbeitsvorgang unter Zugabe eines Betriebsmittels durchgeführt, welches als Schmier- und/oder Kühlmittel wirkt, so dass der Kontaktbereich zwischen Werkzeug und Werkstück bzw. Zahnrad ausreichend geschmiert oder gekühlt wird. Aus der Praxis ist dabei bekannt, dass ein Teil des Betriebsmittels insbesondere beim Eintauchen der Schleifscheibe oder Schleifschnecke an der Eintrittsstirnseite des Werkstücks von der Stirnfläche abprallt und aus dem Kontaktbereich zwischen Werkstück und Schleifscheibe oder Schleifschnecke ungewollt abgeführt wird. Dadurch ist die Schmierung oder Kühlung insbesondere zu Beginn des Schleifvorgangs unzureichend. Analoges gilt bei Richtungsumkehr auch an der Austrittsstirnseite.

Aus der CH 630 832 A5 ist eine numerisch steuerbare Schleifscheibe bekannt, bei der die Zufuhr des Kühlmittels mittels eine Kühlprogrammes zeitlich und mengenmäßig den Schleifbedingungen angepasst erfolgt. Dies ist jedoch aufwändig.

Die DE 196 26 879 A1 lehrt ein Verfahren zur Vermeidung von Überbeanspruchung eines Werkstückes oder der Schleifscheibe. Dabei wird aus den Strömen, die den Antriebsmotoren zugeführt werden und aus dem beim Schleifen auftretenden Körperschall auf eine Beanspruchung des Werkstücks und der Schleifscheibe geschlossen, um den Vorschub daran anzupassen. Auch dieses Verfahren ist aufwändig und erschwert mit der als Störgröße wirkenden Beanspruchung einen weitgehend homogenen Fertigungsablauf.

Aufgabe der Erfindung ist es daher, ein Verfahren anzubieten, mit dem die Vorhaltung von Betriebsmittel im Kontaktbereich beim Zahnradschleifen verbessert wird. Aufgabe ist weiterhin die Bereitstellung einer geeigneten Vorrichtung zur Durchführung des Verfahrens.

Die Aufgabe wird gelöst durch ein Verfahren nach Anspruch 1 bzw. eine Vorrichtung nach Anspruch 7.

Die Erfindung geht von der Erkenntnis aus, dass das Betriebsmittel besonders gut und effektiv dem Kontaktbereich zugeführt werden kann, wenn an Eintritts- bzw. Stirnseite des Werkstücks, von der aus die Schleifscheibe oder Schleifschnecke eindringt, ein Führungsmittel angeordnet ist, um das Betriebsmittel wenigstens teilweise zwangszuführen, und zwar insbesondere bereits bei Werkzeugpositionierung oberhalb der Verzahnung. (Analog kann das bzw. ein weiteres Führungsmittel auch auf der Austrittsstirnseite angeordnet sein, wenn das Werkzeug von dort in Richtung zur Eintrittstirnseite bewegt wird, um dabei eine Lücke zu schleifen. Dadurch wird vorteilhaft vermieden, dass das Betriebsmittel vom Werkstück abströmen oder abspritzen kann, so dass es im Kontaktbereich in ausreichender Menge zur Verfügung steht.

Erfindungsgemäß wird das Schmiermittel oder Kühlmittel mittels eines an oder auf der ersten Stirnseite angeordneten Führungsmittels zwangsgeführt, um ein Abströmen des Schmiermittels von der Schleifscheibe oder Schleifschnecke weg zu erschweren. Dabei kann es sich um ein das Schmiermittel teilweise umfassendes, zur Schleifscheibe oder Schleifschnecke hin offenes, vorzugsweise U- oder V-förmiges Schalungselement handeln. Ziel dieser Formgebung ist es, ein Abströmen bzw. Ablaufen oder Fortspritzen des Schmiermittels aus dem Kontaktbereich zu erschweren oder zu vermeiden. Dazu stellt das Führungsmittel eine räumliche Begrenzung für das Schmiermittel dar, so dass dieses nicht in beliebiger Richtung ablaufen kann. Stattdessen wird der Ablauf des Schmiermittels bevorzugt in Richtung auf den Kontaktbereich bzw. in die jeweils herzustellende bzw. zu bearbeitende Zahnlücke bewirkt, um dort die gewünschte Schmierung oder Kühlung sicherzustellen. Da das Führungsmittel zur Schleifscheibe oder Schleifschnecke hin offen, zur sonstigen Umgebung aber bestmöglich geschlossen ausgebildet ist bzw. sein soll, vermag das Schmiermittel diese räumliche Begrenzung nur in Richtung auf die Schleifscheibe oder Schleifschnecke hin bzw. in Längsrichtung des Schalungselements zu verlassen, wodurch es an die Schleifscheibe oder Schleifschnecke bzw. in die entstehende Zahnlücke geführt wird.

Dadurch wird entlang des gesamten Hubweges der Schleifscheibe oder Schleifschnecke eine ausreichende Schmiermittelvorhaltung erzielt und der aus dem Stand der Technik bekannte Nachteil überwunden.

Insbesondere kann das Führungsmittel als vorzugsweise die Schleifscheibe oder Schleifschnecke seitlich umgreifender Kanalabschnitt ausgebildet sein, um zwischen sich und der Schleifscheibe oder Schleifschnecke Schmiermittel aufzubauen und/oder gegen Abströmen zu sichern.

Insbesondere kann das Führungsmittel mit einer Anzahl von Schalungsabschnitten versehen sein, die derjenigen Anzahl der zu fertigen Zahnlücken entspricht, und welches so am Werkstück angeordnet wird, das jeweils ein Schalungsabschnitt mit jeweils einer Zahnlücke im Wesentlichen fluchtet. Dabei kann es sich um eine einfaches, insbesondere scheibenartiges Element mit entsprechend vorgefertigten Lücken im Randbereich handeln, welches oberhalb bzw. auf dem zu fertigenden Zahnrad angebracht wird. In den Lücken dieser Scheibe wird - wie bei dem (vorzugsweise einzelnen U- oder V-förmigen Schalungselement - das Schmiermittel auch seitlich geführt. Diese vorteilhaften Ausführungsform der Erfindung beinhaltet eine Kopplung des Führungsmittels an die Bewegungen des Werkstückes.

Erfindungsgemäß wird das Schmiermittel mittels eines an oder auf der ersten Stirnseite angeordneten Führungsmittels zwangsgeführt, um ein Abströmen des Schmiermittels von der Schleifscheibe oder Schleifschnecke weg zu erschweren. Dies kann bedingt auch erreicht werden durch ein einfacheres, ebenes Schalungselement oder eine auf dem Werkstück zusätzlich gespannte Scheibe, wobei das ebene Schalungselement oder der Zylindermantel der zusätzlich auf dem Werkstück gespannten Scheibe ein Abströmen oder Abprallen vor allem in radialer Richtung des Werkstücks verhindert.

Die Bewegung der Werkzeugs erfolgt beim Schleifen vorzugsweise weitgehend parallel zur Werkstückachse.

Weitere vorteilhafte Ausführungsformen ergeben sich aus den Unteransprüchen.

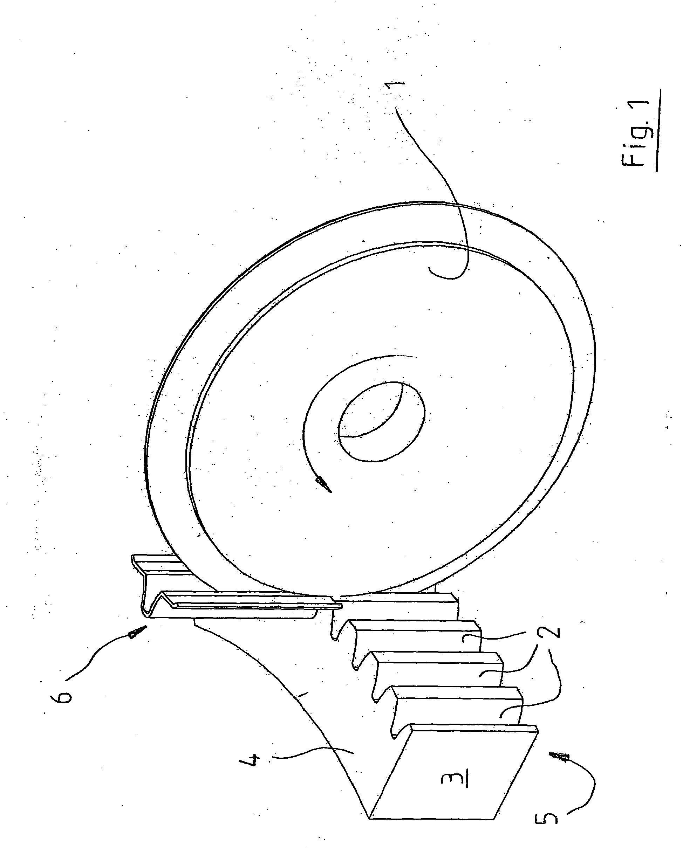

Nachfolgend wird eine Ausführungsform der Erfindung anhand der einzigen Figur 1 näher beschrieben.

Figur 1 zeigt in schematischer perspektivischer Darstellung die Fertigung eines Zahnrades mit Hilfe einer Schleifscheibe oder Schleifschnecke 1. Die Schleifscheibe oder Schleifschnecke 1 greift in ein Werkstück 3 ein, das im Wesentlichen scheibenförmige Gestaltung hat und eine nach oben gewandte Eintrittsstirnseite 4 und eine dieser Eintrittsstirnseite gegenüberliegende Austrittsstirnseite 5 aufweist.

Zur Ausbildung von Zahnlücken 2 bewegt sich die Schleifscheibe 1 oder Schleifschnecke in vertikaler Richtung von oben nach unten, wobei sie Material gemäß ihres Randprofils aus dem Werkstück 3 austrägt. Auf der Eintrittsstirnseite 4 des Werkstücks 3 ist ein erfindungsgemäßes Führungsmittel 6 angeordnet. Das Führungsmittel 6 hat die Gestalt eines etwa V-förmigen Längsprofils, dessen Schenkel die Schleifscheibe oder Schleifschnecke 1 teilweise seitlich umgreifen und an ihren freien Enden etwas nach außen gekröpft sind. Das Führungsmittel 6 bildet damit einen im Wesentlichen senkrechtstehenden Kanal für das Schmiermittel, welches dadurch zwangsweise im Kontaktbereich gehalten bzw. auf diesen hingeführt wird. Der aus dem Stand der Technik bekannte Nachteil der schlechten Schmierung oder Kühlung insbesondere bei Beginn des jeweiligen Schleifvorgangs ist damit vorteilhaft überwunden.

## Patentansprüche

1. Verfahren zum Schleifen von außen- und/oder innenverzahnten Zahnrädern, wobei mittels eines Schleifwerkzeugs (1) Zahnlücken (2) in ein im Wesentlichen scheiben- oder zylinderförmiges Werkstück (3) eingebracht werden,
a wobei das rotierende Werkzeug (1) von einer Eintrittsstirnseite (4) des Werkstückes (3) in Richtung zur einer der Eintrittsseite (4) gegenüberliegenden Austrittsstirnseite (5) oder in umgekehrter Richtung von der Austrittsstirnseite (5) in Richtung der Eintrittsstirnseite (4) bewegt wird, um dabei eine Zahnlücke zu schleifen, und
b wobei ein Kontaktbereich zwischen Werkzeug (1) und Werkstück (3) mit einem Betriebsmittel benetzt wird, welches über eine vorzugsweise mit dem Werkzeug (1) bewegte Zuführeinrichtung zugeführt wird,
**dadurch gekennzeichnet,**
c **dass** das Betriebsmittel mittels eines auf oder an der Eintrittsstirnseite (4) und/oder auf oder an der Austrittsstirnseite (5) angeordneten Führungsmittels (6) zwangsgeführt wird, um ein Abströmen des Schmiermittels vom Werkstück (3) zu erschweren.

2. Verfahren nach Anspruch 1, **dadurch gekennzeichnet, dass** das Führungsmittel wenigstens einen das Betriebsmittel teilweise umfassenden, zum Werkzeug hin offenen, vorzugsweise U-, V- oder kanalförmigen Schalungsabschnitt (6) umfasst.

3. Verfahren nach Anspruch 1, **dadurch gekennzeichnet, dass** ein Führungsmittel in Form einer Scheibe oder eines Bleches verwendet wird.

4. Verfahren nach Anspruch 2, **dadurch gekennzeichnet, dass** ein Führungsmittel mit einer Anzahl von Schalungsabschnitten (6) verwendet wird, die derjenigen Anzahl der zu fertigen Zahnlücken entspricht, und welches so am Werkstück angeordnet wird, das jeweils ein Schalungsabschnitt mit jeweils einer Zahnlücke im Wesentlichen fluchtet.

5. Verfahren nach einem der vorigen Ansprüche, **dadurch gekennzeichnet, dass** als Betriebsmittel ein Schmier- und/oder Kühlmittel eingesetzt wird.

6. Verfahren nach einem der vorigen Ansprüche, **dadurch gekennzeichnet, dass** die Schleifbewegung weitgehend achsparallel zur Werkstückachse erfolgt.

7. Vorrichtung zur Herstellung von Zahnrädern, insbesondere zur Durchführung des Verfahrens nach einem der vorgenannten Ansprüche,
a mit einem vorzugsweise als Schleifscheibe oder Schleifschnecke ausgebildeten Schleifwerkzeug (1) zum Einbringen von Zahnlücken (2) in ein im Wesentlichen scheiben- oder zylinderförmiges Werkstück (3),
b wobei das rotierende Werkzeug (1) von einer Eintrittsstirnseite (4) des Werkstückes (3) in Richtung einer Austrittsstirnseite und/oder von der Austrittsstirnseite (5) des Werkstückes (3) in Richtung der Eintrittsstirnseite (4) bewegbar ist,
c und wobei der Kontaktbereich zwischen Werkzeug (1) und Werkstück (3) mit einem der Schmierung und/oder Kühlung dienenden Betriebsmittel benetzbar ist,
**dadurch gekennzeichnet,**
d **dass** das Betriebsmittel mittels eines auf oder an der Eintrittsstirnseite (4) und/oder auf oder an der Austrittsstirnseite (5) angeordneten Führungsmittels (6) zwangsführbar ist, um ein Abströmen des Schmiermittels vom Werkstück (3) zu erschweren.

8. Vorrichtung nach Anspruch 8, **dadurch gekennzeichnet, dass** das Führungsmittel wenigstens einen das Betriebsmittel teilweise umfassenden, zum Werkzeug (1) hin offenen, vorzugsweise U-, V- oder kanalförmigen Schalungsabschnitt (6) umfasst.

9. Vorrichtung nach Anspruch 7 oder 8, **dadurch gekennzeichnet, dass** das Führungsmittel mit einer Anzahl von Schalungsabschnitten (6) ausgestattet ist, die derjenigen Anzahl der zu fertigen Zahnlücken entspricht, um es so am Werkstück (1) anzuordnen, dass jeweils ein Schalungsabschnitt (6) mit jeweils einer Zahnlücke im Wesentlichen fluchtet.

10. Vorrichtung nach Anspruch 7 oder 8, **dadurch gekennzeichnet, dass** das Führungsmittel (6) als vorzugsweise in der Ebene der Schleifscheibe angeordneter, die Schleifscheibe seitlich umgreifender Kanalabschnitt (6) ausgebildet ist, um zwischen sich und der Schleifscheibe Schmiermittel aufzustauen und/oder gegen Abströmen zu sichern.

11. Vorrichtung nach einem der vorherigen Vorrichtungsansprüche, **dadurch gekennzeichnet, dass** das Führungsmittel (6) die Form einer Scheibe oder eines Bleches aufweist.

12. Vorrichtung nach einem der vorherigen Vorrichtungsansprüche, **dadurch gekennzeichnet, dass** das Führungsmittel (6) an die Bewegung des Werkzeugs (1) gekoppelt ist, wobei das Führungsmittel (6) federnd aufgehängt sein kann.

13. Vorrichtung nach einem der vorherigen Vorrichtungsansprüche, **dadurch gekennzeichnet, dass** das Betriebsmittel über wenigstens eine ortsfeste und/oder bewegte Zuführeinrichtung dem Kontaktbereich zuführbar ist.
